# EUROPEAN PATENT APPLICATION

(11) **EP 1 024 346 A1**
(43) Date of publication of application: **02.08.2000**
(21) Application number: 99123469.1
(22) Date of filing: 25.11.1999
(51) Int. Cl.: G01C 21/16

(54) **Device for determining the coordinates of routes and paths**

(30) Priority: 11.01.1999 IT TO990021
(71) Applicant: Grego, Maurizio, 10070 San Francesco al Campo (To) (IT); Grego, Giorgio, 10070 San Francesco al Campo (TO) (IT); Petrini, Paolo, 10020 Moncalieri (TO) (IT)
(72) Inventor: Grego, Maurizio, 10070 San Francesco al Campo (TO) (IT)

(57) **Abstract**

The invention enables the measurement with huge accuracy of routes (outside or within buildings, chimneys, ducts....) with a high update rate (about 1ms update rate) with a precision of the co-ordinates of about one centimetres.

The said function can be realised with a miniaturised inertial platform which by means of an electronic circuit analyses the positions and accelerations versus time enabling the reconstruction and storage of the path.

## Description

Up to now the task of determining the co-ordinates of routes and paths in ducts, pipes, tunnels of various type has been accomplished by sensors using the Global Positioning System (GPS). This system permits a measurement where accuracy is proportional to the time dedicated to the measurement (a few centimetres accuracy needs a measuring time of many minutes). This is a limitation peculiar to the urban environment, where a huge accuracy is needed and rarely can all the available satellites be received. An other field in which the invention excels, is the determination of the 3D co-ordinates of underground routes (or within buildings) where the signal from the satellites is unavailable. The invention enables the measurement with huge accuracy of routes (outside or within buildings, chimneys, ducts....) with a high update rate (about 1ms update rate) with a precision of the co-ordinates of about one centimetre.

The said function can be realised with a miniaturised inertial platform, which by means of an electronic circuit, analyses the positions and accelerations versus time enabling the reconstruction and storage of the path. The co-ordinates are referenced to a starting point (where the device is reset); knowing the co-ordinates of the starting point, with simple calculations, the co-ordinates of all the points will be available.

The miniaturised inertial platform is made of a sensor capable of measuring acceleration and static position (measuring on each axis the component of the acceleration of gravity g=9.81 m/sec2) on each of the three orthogonal axes. After having measured and computed acceleration and position it is possible to determine the co-ordinates of the route in 3D

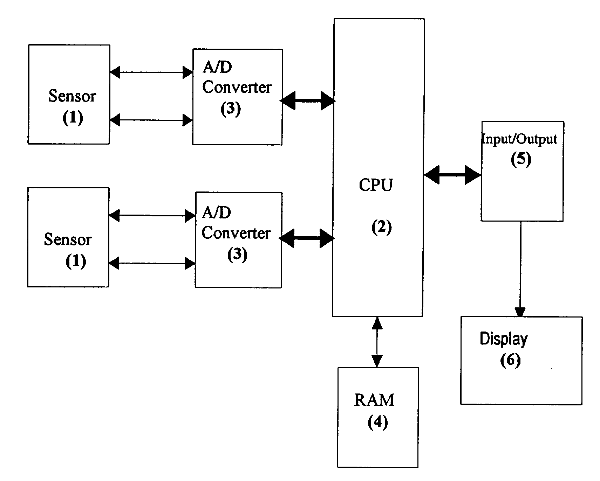

For clarification, the drawing shows a possible block diagram of the system. The described device comprises one or more acceleration and trim sensors (1), a computing unit (2) connected to sensors (1) by means of analog to digital converters (3) able to generate signals needed for the replication of the route. The sensors (1) are connected to the analog to digital converter (3) via a suitable conditioning circuitry, and are elaborated by the microprocessor (2) and stored in its working memory (4) (RAM).

The I/O device (5) enable the operator to program the type of operation desired and eventually retrieve data which were formerly stored on the microprocessor memory. The device (6) enables the operator to view (and measure) the route in 3D and eventually store it in a convenient form. Due to the very limited current consumption of the intelligent sensing device (in the order of tens of mW), this power can be easily produced by built-in batteries or even solar cells.

For reference only a list of possible electronic components is included:
sensor: ADXL202
AD converter AD574A
CPU MC68HC12
RAM 6116-6264
I/O 26LS3 1 26LS32

It should be noted that the proposed schematic is for reference only: using alternative techniques, it might be possible to eliminate the analog to digital conversion, the type of memory can be different or integrated into the CPU (which can be of a different type), the I/O could be integrated into the CPU. In some cases the microprocessor itself could be eliminated, or all the block diagram could be integrated in one component (GATE ARRAY).

Concluding, the invention serves to make a system that:
- Enables the realisation of a probe which measures the 3 dimensional co-ordinates of the path covered by the probe itself
- These probes can be mounted into a device which can move autonomously in pipes, ducts or tunnels, enabling a real time monitoring of the path covered (if connected to an external computing device) or post-processing if the computing unit is built in the probe.
- In case a film or videotape of the route is available, the invention enables a precise association between each image and its position, thus enabling various types of intervention with extreme precision.
- Due to the small size and minimal power consumption of the said device, it is possible to mount it in hermetical spheres, of a few centimetres of diameter (containing also the batteries), which will be inserted in piping of various types (gas, water, fuel...) and transported by the flux; once recuperated, reading the content of the storage memory will give the path covered.
- Enables also the tracing of underground rivers
- An other application is to insert the sphere into a duct, create a flux of air (or other fluid) which will transport the sphere within the duct; again reading the content of the storage memory will provide all the data about the path covered.

## Claims

1. Device to measure the spatial co-ordinates of a route (path) covered by the device itself

2. Device according to claim 1, in which at least one sensor acquiring acceleration, force of gravity and or position on three orthogonal axis is present

3. Device according to claims 1,2 which contains a data storage unit enabling the reconstruction and visualisation of the path **after** post processing

4. Device according to claims 1,2,3 which contains a processing unit enabling the reconstruction and storage of the path in real time

5. Device according to claims 1-4 comprising a real time route display

6. Device according to claims 1-5 with integrated sensor, memory, processor and data conversion.

7. Device according to claims 1-6 contained into a (eventually hermetic) package of suitable shape (sphere, cylinder, cone..) able to be passively transported by fluids (liquids, gases, powders..)

8. Device according to claims 1-6 contained into a (eventually hermetic) package of suitable shape (sphere, cylinder, coons..) able to be passively transported by external means (ropes, rods...)

9. Device according to claims 1-6 contained into a (eventually hermetic) package of suitable shape (sphere, cylinder, coons..) mounted on means of transport with autonomous movement

10. Device according to claims 1-6 which enables the computation of the route dynamics (speed and acceleration: min max instantaneous values) in order to evaluate the parameters of goods transportation and/or the relevant parameters of a driver
